# EUROPÄISCHE PATENTSCHRIFT

(11) **EP 1 529 071 B1**
(45) Veröffentlichungstag und Bekanntmachung des Hinweises auf die Patenterteilung: **21.06.2006**
(21) Anmeldenummer: 03793700.0
(22) Anmeldetag: 07.08.2003
(51) Int. Cl.: C08G 18/10, C08G 18/83, C08G 18/71, C08G 65/336

(54) **POLYMERMASSEN AUF BASIS ALKOXYSILANTERMINIERTER POLYMERE MIT REGULIERBARER HÄRTUNGSGESCHWINDIGKEIT**
POLYMER MASSES BASED ON ALKOXYSILANE-TERMINATED POLYMERS HAVING A REGULATABLE HARDENING SPEED
MASSES POLYMERES A BASE DE POLYMERES A TERMINAISON ALKOXYSILANE PRESENTANT UNE VITESSE DE DURCISSEMENT REGULABLE

(30) Priorität: 14.08.2002 DE 10237271
(43) Veröffentlichungstag der Anmeldung: 11.05.2005
(73) Patentinhaber: Consortium für elektrochemische Industrie GmbH, 81379 München (DE)
(72) Erfinder: SCHINDLER, Wolfram, 84577 Tüssling (DE); STANJEK, Volker, 81479 München (DE)
(74) Vertreter: Fritz, Helmut
(86) Internationale Anmeldenummer: PCT/EP2003/008782
(87) Internationale Veröffentlichungsnummer: WO 2004/022618

(56) Entgegenhaltungen:
- DE-A- 2 155 258
- US-A- 3 676 478
- US-A- 5 118 290
- US-A- 5 554 709

## Beschreibung

Die Erfindung betrifft ein Verfahren zur Regulierung der Hautbildungszeiten von alkoxysilanterminierte Polymere enthaltende Polymermassen, die lange Hautbildungszeiten aufweisen und durch Zusatz eines Katalysators aktiviert werden können.

Polymersysteme, die über reaktive Alkoxysilylgruppen verfügen, sind seit langem bekannt. In Gegenwart von Luftfeuchtigkeit sind diese alkoxysilantermierten Polymere bereits bei Raumtemperatur in der Lage, unter Abspaltung der Alkoxygruppen miteinander zu kondensieren. Je nach Gehalt an Alkoxysilangruppen und deren Aufbau bilden sich dabei hauptsächlich langkettige Polymere (Thermoplaste), relativ weitmaschige dreidimensionale Netzwerke (Elastomere) oder aber hochvernetzte Systeme (Duroplaste).

Dabei kann es sich sowohl um alkoxysilanterminierte Polymere mit organischem Rückgrat handeln, z.B. um Polyurethane, Polyester, Polyether etc., beschrieben u.a. in EP-A-269 819, EP-A-931 800, WO 00/37533, US-A-3,971,751 und DE-A-198 49 817, als auch um Copolymere, deren Rückgrat neben organischen Bestandteilen auch Organosiloxane enthält, beschrieben u.a. in WO 96/34030.

Entsprechend der zahllosen Möglichkeiten zur Gestaltung von derartigen silanterminierten Polymersystemen lassen sich sowohl die Eigenschaften der unvernetzten Polymere bzw. der polymerhaltigen Mischungen (Viskosität, Schmelzpunkt, Löslichkeiten etc.) als auch die Eigenschaften der fertig vernetzten Massen (Härte, Elastizität, Zugfestigkeit, Reißdehnung, Hitzebeständigkeit etc.) nahezu beliebig einstellen. Entsprechend vielfältig sind daher auch die Einsatzmöglichkeiten von derartigen silanterminierten Polymersystemen. So lassen sie sich beispielsweise zur Herstellung von Elastomeren, Dichtstoffen, Klebstoffen, elastischen Klebesystemen, harten und weichen Schäumen, den unterschiedlichsten Beschichtungssystemen und im medizinischen Bereich, z.B. für Abformmassen im Dentalbereich verwenden. Diese Produkte lassen sich in jeder Form applizieren, wie z.B. streichen, sprühen, gießen, pressen etc..

Nachteilig an den meisten beschriebenen alkoxysilanterminierten Polymersystemen ist allerdings deren nur mäßige Reaktivität gegenüber Feuchtigkeit, sowohl in Form von Luftfeuchtigkeit als auch in Form von - gegebenenfalls zugesetztem - Wasser. Um auch bei Raumtemperatur eine hinreichende Härtungsgeschwindigkeit zu erreichen, ist daher der Zusatz eines Katalysators unbedingt erforderlich. Das ist vor allem deshalb problematisch, da die in der Regel als Katalysatoren eingesetzten zinnorganischen Verbindungen toxikologisch bedenklich sind. Zudem enthalten die. Zinnkatalysatoren oftmals auch noch Spuren hochtoxischer Tributylzinnderivate.

Besonders problematisch ist die geringe Reaktivität der alkoxysilanterminierten Polymersysteme, wenn Systeme erwünscht sind, die auch bei Raumtemperatur über eine hohe Härtungsgeschwindigkeit - z.B. Hautbildungszeiten < 15 min - verfügen. Mit den gängigen alkoxysilanterminierten Polymeren lassen sich derart reaktive Systeme - wenn überhaupt - nur mit sehr hohen Konzentrationen von Zinnkatalysatoren erreichen. Dies führt in der Regel zu Zinngehalten von über 1000 ppm.

Unter Hautbildungszeit ist dabei derjenige Zeitraum zu verstehen, der nach der Applikation der Polymerabmischung bis zur Bildung einer Haut vergeht. Dabei gilt die Hautbildung als abgeschlossen, sobald die Mischung bei einer Berührung - z.B. durch einen Laborspatel - nicht mehr am Spatel hängen bleibt und beim Entfernen des Spatels keinen Fadenzug mehr zeigt.

Ein weiterer entscheidender Nachteil der relativ geringen Reaktivität der herkömmlichen alkoxysilanterminierten Polymersysteme liegt in der Tatsache, daß man für die meisten Anwendungen lediglich methoxysilylterminierte, nicht aber ethoxysilylterminierte Polymere verwenden kann. Dabei wären gerade die ethoxysilylterminierten Polymere besonders vorteilhaft, weil bei ihrer Aushärtung nicht Methanol sondern lediglich Ethanol als Spaltprodukt freigesetzt wird. Jedoch besitzen die ethoxysilylterminierten Polymere eine nochmals deutlich reduzierte Reaktivität, so daß mit ihnen bei Raumtemperatur keine für die meisten Anwendungen hinreichenden Hautbildungs- bzw. Durchhärtungsgeschwindigkeiten mehr erreicht werden können.

Deutlich günstiger sind hier Polymerabmischungen, die alkoxysilanterminierte Polymere mit der Endgruppe (1) der allgemeinen Formel

-A-CH₂-SiR¹ₐ(OR²)₃₋ₐ (1)

enthalten, wobei
- A: eine zweibindige Bindegruppe ausgewählt aus -O-CO-N(R³)-, -N(R³)-CO-O-, -N(R³)-CO-NH-, -NH-CO-N(R³)-, -N(R³)-CO-N(R³) ,
- R¹: einen gegebenenfalls halogensubstuierten Alkyl-, Cycloalkyl-, Alkenyl- oder Arylrest mit 1-10 Kohlenstoffatomen,
- R²: einen Alkylrest mit 1-6 Kohlenstoffatomen oder einen Oxaalkyl-alkylrest mit insgesamt 2-10 Kohlenstoffatomen,
- R³: Wasserstoff, einen gegebenenfalls halogensubstuierten cyclischen, linearen oder verzweigten C₁- bis C₁₈-Alkyl-oder Alkenylrest oder einen C₆- bis C₁₈-Arylrest und
- a: eine ganze Zahl von 0 bis 2 bedeuten.
Derartige silanterminierte Polymere, deren Silanterminierung nur durch eine Methyleneinheit von einem benachbarten Heteroatom getrennt sind, zeichnen sich durch eine extrem hohe Reaktivität gegenüber Luftfeuchtigkeit aus. So lassen sich mit derartigen methylengespacerten Präpolymeren Abmischungen herstellen, deren Hautbildungszeiten sogar in Abwesenheit von jeglichen Zinnkatalysatoren in der Größenordnung von nur wenigen Minuten liegt. Dabei kann es sich sowohl um methoxysilanterminierte als auch um die besonders vorteilhaften ethoxysilanterminierte Polymere handeln.

Verbindungen entsprechend der allgemeinen Formel (1) sind dabei zum Teil schon beschrieben, z.B. in DE-A-18 12 562 oder DE-A-18 12 564. Nachteilig bei diesen Polymeren ist allerdings die Tatsache, daß zu ihrer Herstellung ausschließlich Aminoalkylsilane der allgemeinen Formel (2) eingesetzt wurden,

NH(R³)-CH₂-SiR¹ₐ(OR²)₃₋ₐ (2)

die als Reste R³ entweder Wasserstoff oder aber aliphatische und sterisch wenig anspruchsvolle Gruppen wie Cyclohexyl-, oder n-Butylreste besitzen. R¹, R² und a weisen dabei die oben genannten Bedeutungen auf.

Diese Verbindungen werden mit Isocyanat- oder aber mit Chlorameisensäure-terminierten Polymeren zu den entsprechenden alkoxysilanterminierten Präpolymeren umgesetzt.

Zwar lassen sich auf diese Weise hochreaktive isocyanatfreie Polymermischungen herstellen - und zwar sowohl aus methoxysilylterminierten als auch aus ethoxysilylterminierten Polymeren -, jedoch sind diese hohen Reaktivitäten weder kontrollierbar, noch lassen sie sich für die jeweilige Anwendung bedarfsgerecht einstellen.

So werden bei Herstellungsverfahren entsprechend DE-A-18 12 562 oder DE-A-18 12 564 Polymere erhalten, die mit Hautbildungszeiten von << 5 min über Reaktivitäten verfügen, die für viele Anwendungen deutlich zu hoch sind und auch nicht verringert oder gesteuert werden können. Diese Polymere lassen sich praktisch kaum noch handhaben und besitzen nur eine geringe Lagerstabilität. Zudem können derart reaktive Polymere in der Regel nicht in gängigen Compoundierungen, vor allem nicht in füllstoffhaltigen Massen eingesetzt werden, da die hochreaktiven Polymere sofort mit der in nahezu jedem Füllstoff enthaltenen Restfeuchtigkeit und/oder mit reaktiven OH-Gruppen auf der Oberfläche des jeweiligen Füllstoffes reagieren. Dies führt in der Regel zu einem Verklumpen der Masse. Auch durch gängige Wasserfänger, wie z.B. Vinyltrimethoxysilan, lassen sich dabei keine Verbesserungen erzielen. So ist das Polymer deutlich reaktiver als der herkömmliche Wasserfänger, so daß letzterer seine Aufgabe, Wasserspuren noch vor einer Reaktion mit dem silanterminierten Polymer abzufangen, nicht erfüllen kann.

Nachteilig ist zudem, daß der Zusatz eines Härtungskatalysators, z.B. auch eines gängigen Zinnkatalysators wie Dibutylzinndilaurat, nicht zur Einstellung der Reaktivität eingesetzt werden kann, da sich die ohnehin schon extrem hohe Reaktivität der Prepolymere praktisch kaum noch steigern läßt. Dies macht es unmöglich, aus diesen Polymerabmischungen Massen herzustellen, die erst bei Bedarf - durch Zugabe eines Katalysators - aktivierbar sind.

In DE-A-21 55 258 und DE-A-21 55 259 wird vorgeschlagen, den Polymerabmischung zur Steigerung der Lagerstabilität zusätzlich Alkohole und Säureanhydride zuzugeben. Nachteilig an diesem Verfahren ist zum einen die drastische Steigerung der Mengen an flüchtigen organischen Verbindungen, die bei einer Aushärtung der alkoxysilanterminierten Polymere verdampfen müssen. So müssen die in DE-A-21 55 258 und DE-A-21 55 259 beschriebenen Polymere mit bis zu 400 Gew.-% einer Lösung aus Alkoholen und anderen organischen Lösungsmitteln versetzt werden. Zum anderen führt der Zusatz von Säureanhydriden zu sauren Massen, die zahlreiche Untergründe angreifen können. Dadurch wird die Oberfläche des Untergrundes nachhaltig geschädigt, was zu einem weitgehenden Haftungsverlust der jeweiligen Masse auf dieser Oberfläche führt.

Zudem läßt Sich durch diese Maßnahmen lediglich die Lagerbeständigkeit der resultierenden Massen nennenswert verbessern. So besitzen die in DE-A-21 55 258 und DE-A-21 55 259 beschriebenen Systeme bei 25 °C und ca. 60 % Luftfeuchtigkeit nach wie vor Hautbildungszeiten von 1 - 15 min. Reaktionsträge und - zumindest kurzfristig - auch an der Luft beständige Massen, die erst durch die Zugabe eines geeigneten Katalysators aktiviert werden, lassen sich nach diesem Verfahren nicht erreichen.

Aufgabe der vorliegenden Erfindung war daher die Entwicklung alkoxysilanterminierter Polymerabmischungen, die bei Raumtemperatur lagerstabil und problemlos handhabbar sind, aber bei Bedarf jederzeit durch den Zusatz eines geeigneten Katalysators zu hochreaktiven Massen aktiviert werden können.

Gegenstand der Erfindung ist ein Verfahren zur Regulierung der Hautbildungs Zeiten von Polymermassen (M), die alkoxysilanterminierte Polymere (P) mit Endgruppen der allgemeinen Formel (1)

-A-CH₂-SiR¹ₐ(OR²)₃₋ₐ (1),

enthalten, in der A, R¹, R² und a die oben angegebenen Bedeutungen aufweisen, wobei die Polymermassen (M) durch Einstellen eines maximalen Gehalts an aktivierenden Verbindungen (AV) bei 23°C und 50 % relativer Luftfeuchtigkeit Hautbildungszeiten > 40 min aufweisen, beidem die Hautbildungszeiten dieser Polymermassen (M) durch den auschliessenden Zusatz eines Katalysators (K) der ausgewählt wird aus Säuren, Basen und organischen Metallverbindungen in Konzentrationen bis zu 3 Gew.-% auf < 20 min reduziert werden.

Der Erfindung beruht auf der überraschenden Entdeckung, daß Polymerabmischungen, die alkoxysilanterminierte Polymere (P) mit Endgruppen der allgemeinen Formel (1) enthalten, nur dann hochreaktiv sind, wenn sie gleichzeitig sterisch ungehinderte Basen oder Säuren oder aromatische Aminhydrochloride enthalten. Jedoch reichen dabei bereits Spuren dieser Basen oder Säuren für eine Aktivierung der alkoxysilanterminierten Polymere (P) aus. Da derartige Basen- oder Säurespuren in sämtlichen Polymeren enthalten sind, die nach Verfahren entsprechend des Standes der Technik hergestellt worden sind, waren die reaktionsträgen Polymermassen (M), die Polymer (P) enthalten, bislang völlig unbekannt. So enthalten die Polymerabmischungen, die entsprechend der Verfahren von DE-A-18 12 562, DE-A-18 12 564, DE-A-21 55 258 oder DE-A-21 55 259 hergestellt worden sind, stets noch Spuren von nicht umgesetzten Aminosilanen der allgemeinen Formel (2). Da es sich bei den eingesetzten Aminosilanen nur um Silane der allgemeinen Formel (2) handelt, bei denen R³ einen aliphatischen und sterisch wenig anspruchsvollen Rest darstellt, wirken diese Silane automatisch als basische Katalysatoren und führen somit zu Massen mit nicht mehr kontrollierbarer Härtungsgeschwindigkeit.

Die Polymermassen (M) enthalten höchstens 100 ppm, vorzugsweise höchstens 50 ppm aktivierende Verbindungen (AV), die ausgewählt werden aus sterisch ungehinderten Basen, sterisch ungehinderten Säuren und aromatischen Aminhydrochloriden, bezogen auf die gesamte Masse der Polymermassen (M). Vorzugsweise sind die Polymermassen (M) frei von aktivierenden Verbindungen (AV).

Unter aktivierenden Säuren und Basen (AV) werden dabei sämtliche Verbindungen mit einem pKₛ bzw. pK_{B} <7 bevorzugt < 5 verstanden, die in der Lage sind, ein Wasserstoffkation an einen Reaktionspartner abzugeben bzw. von ihm aufzunehmen. Beispiele für sterisch ungehinderte Basen sind sämtliche primären und sekundären Amine.

Bevorzugt sind Polymermassen (M), die bei 23 °C und 50 % relativer Luftfeuchtigkeit Hautbildungszeiten > 1 h aufweisen. Besonders bevorzugt werden Polymermassen (M), die bei 23 °C und 50 % relativer Luftfeuchtigkeit Hautbildungszeiten > 2 h aufweisen.

Zur Aktivierung, d.h. zur Reduzierung der Hautbildungszeiten der Polymermassen (M) können als Katalysatoren (K) sämtliche Säuren, Basen, organische Metallverbindungen, insbesondere organische Zinnverbindungen dienen. Bevorzugt werden dabei organische Säuren oder Basen verwendet, besonders bevorzugt werden organische Amine eingesetzt. Die Konzentrationen der eingesetzten Katalysatoren liegt bevorzugt bei < 2 %, besonders bevorzugt bei < 1 %, jeweils bezogen auf die Polymermassen (M).

Als Reste R¹ werden Methyl-, Ethyl- oder Phenylgruppen bevorzugt. Bei den Resten R² handelt es sich bevorzugt um Methyl- oder Ethylgruppen und als Reste R³ werden Wasserstoff, Alkylreste mit 1-4 Kohlenstoffatomen, Cyclohexyl- und Phenylreste bevorzugt.

Die Hauptketten der alkoxysilanterminierten Polymere (P) können verzweigt oder unverzweigt sein. Die mittleren Kettenlängen können beliebig entsprechend der jeweils gewünschten Eigenschaften sowohl der unvernetzten Mischung als auch der ausgehärteten Masse angepaßt werden. Sie können aus unterschiedlichen Bausteinen aufgebaut sein. Üblicherweise sind dies Polysiloxane, Polysiloxan-Urea/Urethan-Copolymere, Polyurethane, Polyharnstoffe, Polyether, Polyester, Polyacrylate und -methacrylate, Polycarbonate, Polystyrole, Polyamide, Polyvinylester oder Polyolefine wie z.B. Polyethylen, Polybutadien, Ethylen-Olefincopolymere oder Styrol-Butadiencopolymere. Selbstverständlich können auch beliebige Mischungen oder Kombinationen aus Polymeren (P) mit verschiedenen Hauptketten eingesetzt werden.

Die Herstellung der Polymere (P) erfolgt bevorzugt durch ein Verfahren, das die Anwesenheit von aktivierenden Verbindungen (AV) in der fertigen Polymermasse (M) sicher ausschließt.

Vorzugsweise wird zur Herstellung der Polymermassen (M) ein Aminosilan (A1) der allgemeinen Formel (2) eingesetzt, bei dem es sich bei R³ um einen C₆- bis C₁₈-Arylrest handelt. Besonders bevorzugt handelt es sich bei dem Aminosilan (A1) um ein Silan der allgemeinen Formel (3)

NH(Phenyl)-CH₂-SiR¹ₐ(OR²)₃₋ₐ (3),

wobei R¹, R² und a dabei die oben angegebenen Bedeutungen besitzen.

Dieses Aminosilan wird bevorzugt mit einem NCO-terminierten Präpolymer (A2) umgesetzt, wobei die molare Menge des eingesetzten Silans (A1) weitgehend der Zahl der NCO-Einheiten des Präpolymers (A2) entspricht, so daß NCO-frei Polymere erhalten werden.

Als aromatische Amine besitzen die Silane (A1) in der Regel pK_{B-}Werte > 9, auf jeden Fall aber pK_{B}-Werte > 7 und sind somit nicht mehr hinreichend basisch, um die Silankondensation zu katalysieren. Anders als die aliphatischen Aminosilane führen im Polymer (P) verbleibende Spuren des aromatischen Silans (A1) daher nicht zu einer Aktivierung der fertigen hinreichend reaktionsträgen Polymerabmischungen (M).

Ist dabei das isocyanatterminierte Präpolymer (A2) aus einem oder mehreren Polyolen (A21) sowie Di- und/oder Polyisocyanaten (A22) aufgebaut, so ist es nicht unbedingt erforderlich, daß aus diesen Bausteinen (A21, A22) zunächst das Präpolymer (A2) hergestellt wird, welches anschließend mit dem Silan (A1) zum fertigen Polymer (P) umgesetzt wird. So ist hier auch eine Umkehrung der Reaktionsschritte möglich, bei die Di- und/oder Polyisocyanate (A22) zunächst mit dem Silan (A1) umgesetzt werden, und die dabei erhaltenen Verbindungen erst anschließend mit der Polyolkomponente (A21) zum fertigen Polymer (P) umgesetzt werden.

Es wurde weiterhin gefunden, daß beim Einsatz der aromatischen Aminosilane (A1) deren Verunreinigung durch Hydrochloride aromatischer Amine problematisch ist. Dabei kann es sich sowohl um die Hydrochloride der Silane (A1) selbst handeln oder auch um Hydrochloride derjenigen aromatischen Amine, die bei der Synthese der Silane (A1) als Edukte eingesetzt worden sind. Dies gilt insbesondere für Silane (A1) der allgemeinen Formel (3), welche sich beispielsweise aus Anilin und Chlorsilanen der allgemeinen Formel (4)

Cl-CH₂-SiR¹ₐ(OR²)₃₋ₐ (4),

herstellen lassen, wobei R¹, R² und a dabei die oben angegebenen Bedeutungen besitzen.

Das dabei als Nebenprodukt entstehende Aniliniumhydrochlorid läßt sich auf Grund seines sehr niedrigen Siedepunkts von lediglich 245 °C destillativ nur schlecht vom Produkt abtrennen und tritt daher nahezu immer - in Größenordnungen von mindestens 20-100 ppm - als Verunreinigung der Silane der allgemeinen Formel (3) auf.

Dabei sind aromatische Aminhydrochloride auf Grund ihrer - verglichen mit nicht aromatischen Aminen - hohen Säurestärke sehr gute Katalysatoren für die Silankondensation. Somit führen bereits kleinste Spuren derartiger Hydrochloride in den Polymermassen (M) sofort zu Massen mit einer extrem hohen, nicht mehr kontrollierbaren Reaktivität.

Daher wird eine Ausführungsform der Erfindung besonders bevorzugt, bei der ein aromatisches Aminhydrochlorid, insbesondere ein Hydrochlorid von Aminoalkylsilanen der allgemeinen Formel (2) anwesend ist, in der **R**^{**3**} einen C₆- bis C₁₈-Arylrest bedeutet, wobei zusätzlich ein sterisch gehindertes aliphatisches Amin, vorzugsweise in Konzentrationen von 0,001 - 3 Gew.-%, bezogen auf die Polymermasse (M), anwesend ist, welches das aromatische Aminhydrochlorid neutralisiert.

Diese Ausführungsform ist bedeutsam, wenn die alkoxysilanterminierten Polymere (P) unter Einsatz von Aminosilanen der allgemeinen Formel (2), in der **R**^{**3**} einen C₆₋bis C₁₈-Arylrest bedeutet, hergestellt werden, wobei während oder nach der Polymersynthese zusätzlich ein sterisch gehindertes aliphatisches Amin, in Konzentrationen von 0,001 - 3 Gew.-% zugesetzt wird. Bei dem sterisch gehinderten aliphatischen Amin handelt es sich bevorzugt ein tertiäres aliphatisches Amin, besonders bevorzugt um ein N-alkyliertes Morpholinderivat. Dieses Amin dient dabei der Neutralisation, d.h. der Deaktivierung, des katalytisch wirksamen, sauren aromatischen Aminhydrochlorides, mit welchem das eingesetzte aromatische Aminosilan verunreinigt war. Auf Grund der sterischen Abschirmung des basischen Stickstoffatoms kann das zugesetzte sterisch gehinderte Amin dabei nicht selbst als Katalysator wirken. Im Falle des Zusatzes eines Morpholinderivates mit tertiärem Stickstoffatom verhindert neben der sterischen Hinderung am Stickstoffatom zudem auch noch die - im Vergleich zu herkömmlichen aliphatischen Aminen geringe Basenstärke, daß das Morpholinderivat selbst als Katalysator wirkt. Man erhält eine Polymermasse (M) enthaltend silanterminierte Polymere (P), deren Hautbildungszeit bei 23 °C und 50 % relativer Luftfeuchtigkeit > 40 min.

Ein besonders bevorzugtes Beispiel für ein geeignetes sterisch gehindertes Amin ist dabei 2,2'-Dimorpholinodiethylether.

In einer weiteren besonders bevorzugten Ausführungsform der Erfindung werden die alkoxysilanterminierten Polymere (P) unter Einsatz von Aminosilanen der allgemeinen Formel (2), in der **R**^{**3**} einen C₆- bis C₁₈-Arylrest bedeutet, so hergestellt daß die eingesetzten Aminosilane über einen Halogengehalt, insbesondere Chloridgehalt < 20 ppm, bevorzugt < 1 ppm und besonders bevorzugt < 0,1 ppm verfügen.

Bei einer anderen bevorzugten Ausführungsform der Erfindung wird zur Herstellung der Polymere (P) in den Polymermassen (M) ein Isocyanatosilan (B1) der allgemeinen Formel (5)

OCN-CH₂-SiR¹ₐ(OR²)₃₋ₐ (5)

eingesetzt, in der **R**^{**1**}**, R**^{**2**} und a die oben angegebenen Bedeutungen besitzen.

Das Isocyanatosilan (B1) wird mit einem OH- oder NH-terminierten'Präpolymer (B2) umgesetzt. Dabei ist die eingesetzte molare Menge des Silans (B1) kleiner oder aber genauso groß wie die molare Anzahl der OH/NH-Gruppen, so daß NCO-freie Polymere erhalten werden.

Ist dabei das OH-terminierte Präpolymer (B2) aus einem oder mehreren Polyolen (B21) sowie Di- und/oder Polyisocyanaten (B22) aufgebaut, so ist es nicht unbedingt erforderlich, daß aus diesen Bausteinen (B21, B22) zunächst das Präpolymer (B2) hergestellt wird, welches anschließend mit dem Silan (B1) zum fertigen Polymer (P) umgesetzt wird. So ist hier auch eine Umkehrung der Reaktionsschritte möglich, bei der die Polyole (B21) zunächst mit dem Isocyanatosilan (B1) umgesetzt werden, und die dabei erhaltenen Verbindungen erst anschließend mit dem Di- oder Polyisocyanat (B22) zum fertigen Polymer (P) umgesetzt werden.

Bei dieser bevorzugten Ausführung der Erfindung werden bei der Herstellung der Polymere (P) keinerlei basische Verbindungen eingesetzt. Die resultierenden Massen sind somit reaktionsträge und werden erst durch die Zugabe eines Katalysators (K) aktiviert.

Bei einem besonders bevorzugten Verfahren werden dabei die Polymere (P) aus Isocyanatosilanen (B1) und OH-Präpolymeren (B2) in Gegenwart von sehr kleinen Konzentrationen eines Zinnkatalysators, vorzugsweise einer organischen Zinnverbindung hergestellt. Beispiele für Zinnkatalysatoren sind Dibutylzinndilaurat, Dioctylzinndilaurat, Dibutylzinndiacetylacetonat, Dibutylzinndiacetat oder Dibutylzinndioctanoat. Bevorzugt wird dabei Dibutylzinndilaurat eingesetzt. Die Konzentrationen der eingesetzten Zinnkatalysatoren werden dabei bevorzugt so gewählt, daß der Zinngehalt in der resultierenden Masse < 200 ppm, bevorzugt < 100 ppm und besonders bevorzugt < 50 ppm ist.

Dem Einsatz eines Zinnkatalysators bei der Synthese der Polymere (P) liegt die überraschende Entdeckung zugrunde, daß Zinnkatalysatoren die Härtungsreaktion der Polymeren (P) nicht bzw. nur sehr schlecht katalysieren. Dieser Befund ist vor allem deshalb so auffällig, da Zinnverbindungen bei herkömmlichen silanterminierten Polymeren, deren Silanterminierungen nicht der allgemeinen Formel (1) entsprechen, besonders leistungsfähige Katalysatoren darstellen. Die Polymeren (P) hingegen sind auch noch in der Gegenwart der angegebenen Zinnkatalysatorkonzentrationen hinlänglich reaktionsträge und werden erst durch den Zusatz eines geeigneten basischen Katalysators (K) aktiviert.

Bevorzugte Bausteine (A21, A22, B21, B22, C21, C22) zur Herstellung der Polymere (P) sind neben den Silanen (A1, B1, Cl) OH-terminierte Polyole, monomere Alkohole/Amine mit mindestens 2 OH/NH-Funktionen und/oder hydroxyalkyl- oder aminoalkylterminierte Polydiorganosiloxane sowie Di- oder Polyisocyanate.

Bei der Herstellung des Polymeren (P) werden die Konzentrationen aller an sämtlichen Reaktionsschritten beteiligter Isocyanatgruppen und aller isocyanatreaktiver Gruppen sowie die Reaktionsbedingungen bevorzugt so gewählt, daß im Laufe der Polymersynthese sämtliche Isocyanatgruppen abreagieren. Das fertige Polymer (P) ist somit isocyanatfrei.

Als Polyole für die Herstellung der Polymere (P) eignen sich besonders aromatische und aliphatische Polyesterpolyole und Polyetherpolyole, wie sie in der Literatur vielfach beschrieben sind. Prinzipiell können aber sämtliche polymeren, oligomeren oder auch monomeren Alkohole mit zwei oder mehr OH-Funktionen eingesetzt werden.

Als hydroxyalkyl- oder aminoalkylterminierte Polysiloxane werden bevorzugt Verbindungen der allgemeinen Formel (7)

Z-R⁵-[Si(R⁴)₂-O-]ₙ-Si(R⁴)₂-R⁵-Z (7),

eingesetzt, in der
- **R**^{**4**}: einen einwertigen Kohlenwasserstoffrest mit 1 bis 12 Kohlenstoffatomen, bevorzugt Methylrest,
- **R**^{**5**}: einen zweiwertigen verzweigten oder unverzweigten Kohlenwasserstoffrest mit 1-12 Kohlenstoffatomen, bevorzugt Trimethylenrest,
- **n**: eine Zahl von 1 bis 3000, bevorzugt eine Zahl von 10 bis 1000 und
- **Z**: eine OH-, SH- oder eine NHR³-Gruppe bedeuten.

Beispiele für gebräuchliche Diisocyanate sind Diisocyanatodiphenylmethan (MDI), sowohl in Form von rohem oder technischem MDI als auch in Form reiner 4,4' bzw. 2,4' Isomeren oder deren Mischungen, Tolylendiisocyanat (TDI) in Form seiner verschiedenen Regioisomere, Diisocyanatonaphthalin (NDI), Isophorondiisocyanat (IPDI) oder auch von Hexamethylendiisocyanat (HDI). Beispiele für Polyisocyanate sind polymeres MDI (P-MDI), Triphenylmethantriisocanat oder Biuret-triisocyanate.

Bevorzugte Katalysatoren (K) zur Aktivierung der erfindungsgemäßen Polymerabmischungen stellen organische Aminoverbindungen dar. Dabei kann es sich um primäre, sekundäre oder auch tertiäre Amine handeln. Über das Ausmaß der sterischen Abschirmung am Stickstoffatom läßt sich dabei die katalytische Wirksamkeit des Katalysators (K) steuern. Beim Einsatz von sterisch ungehinderten Aminen, z.B. von primären Aminen, lassen sich Polymermassen (M), enthaltend das Polymer (P) herstellen, die über Hautbildungszeiten < 15 min, bevorzugt < 5 min verfügen.

Dabei wird der Katalysator (K) bei Compoundierungen bevorzugt so spät wie möglich zugesetzt. So werden Probleme sowohl mit zu geringen Lagerbeständigkeiten als auch mit einer deutlich erschwerten Handhabbarkeit der Polymermasse (M) vermieden. Nach der Aktivierung durch die Zugabe des Katalysators (K) kann das fertige Compound direkt in Kartuschen, Dosen, Tuben etc. abgefüllt werden. Diese Behältnisse sind in der Regel gasdicht, so daß hier eine hohe Reaktivität gegenüber Luftfeuchtigkeit zu keinen Problemen mehr führt.

Dabei können nahezu alle aliphatischen Amine als Katalysatoren (K) eingesetzt werden. Beispiele für katalytisch wirksame Amine sind Triethylamin, Tributylamin, 1,4-Diazabicyclo[2,2,2]octan, N,N-Bis-(N,N-dimethyl-2-aminoethyl)-methylamin, N,N-Dimethylcyclohexylamin, N,N-Dimethylphenlyamin, 1,5-Diazabicyclo[4.3.0]non-5-en, 1,8-Diazabicyclo[5.4.0]undec-7-en etc. Diese Katalysatoren werden bevorzugt in Konzentrationen von 0,01-10 Gew.-% eingesetzt. Die verschiedenen Katalysatoren können sowohl in reiner Form als auch als Mischungen verschiedener Katalysatoren eingesetzt werden. Durch Typ und Konzentration der zugesetzen Katalysatoren läßt sich die Härtungsgeschwindigkeit bedarfsgereicht einstellen.

In einer weiterhin besonders bevorzugt Ausführungsform werden Verbindungen der allgemeinen Formel (8) als Katalysatoren (K) verwendet,

R⁷R⁸N-R⁶-SiR¹ₐ(OR²)₃₋ₐ (8),

wobei
- **R**^{**6**}: einen zweiwertigen, verzweigten oder unverzweigte Kohlenwasserstoffrest mit 1-10 Kohlenstoffatomen, gegebenenfalls unterbrochen von Sauerstoff oder N(R³)-Gruppen bedeutet,
- **R**^{**7**}**und R**^{**8**}: Wasserstoff oder einen verzweigten oder unverzweigten Alkylrest mit 1-20 Kohlenstoffatomen bedeuten, wobei der Alkylrest auch noch durch Halogenatome, Hydroxylgruppen, Aminogruppen, Monoalkylaminogruppen, Dialkylaminogruppen oder Alkoxygruppen substituiert sein kann und
- **R**^{**1**}**, R**^{**2**}**, R**^{**3**}: und a die vorstehend angegebenen Bedeutungen
besitzen.

Die Polymermassen (M) können als weitere Komponenten an sich bekannte Hilfsstoffe, wie Füllstoffe, Wasserfänger, Reaktivverdünner, Haftvermittler, Weichmacher, Thixotropiermittel, Lichtschutzmittel, Fungizide, Flammschutzmittel, Pigmente etc. enthalten, wie sie für den Einsatz in sämtlichen herkömmlichen alkoxyvernetzenden ein- und zweikomponentigen Massen bekannt sind. Zur Erzeugung der jeweils gewünschten Eigenschaftsprofile sowohl der unvernetzten Polymermassen (M) als auch der ausgehärteten Massen sind derartige Zusätze in der Regel unverzichtbar.

Für die Polymermassen (M) existieren zahllose verschiedene Anwendungen im Bereich der Kleb-, Dicht- und Fugendichtstoffe, Montageschäume, Oberflächenbeschichtungen sowie auch zur Herstellung von Formteilen.

Dabei sind sie für zahllose unterschiedliche Untergründe wie z.B. mineralische Untergründe, Metalle, Kunststoffe, Glas, Keramik etc. geeignet.

Die Polymermassen (M) können dabei sowohl in reiner Form als auch in Form von Lösungen, Emulsionen oder Dispersionen zum Einsatz kommen.

Alle vorstehenden Symbole der vorstehenden Formeln weisen ihre Bedeutungen jeweils unabhängig voneinander auf. In allen Formeln ist das Siliciumatom vierwertig.

Soweit nicht anders angegeben sind alle Mengen- und Prozentangaben auf das Gewicht bezogen, alle Drücke 0,10 MPa (abs.) und alle Temperaturen 20°C.

### Beispiele :

### Herstellung von Isocyanatomethyl-trimethoxysilan

Methylcarbamatomethyl-trimethoxysilan wird in ein Quarz-Pyrolyserohr, das mit Quarzwolle gefüllt ist, im Argon-Gasstrom eingepumpt. Die Temperatur im Pyrolyserohr beträgt zwischen 420 und 470 °C. Das Rohprodukt wird am Ende der beheizten Strecke mit Hilfe eines Kühlers auskondensiert und gesammelt. Die gelblich - braune Flüssigkeit wird durch Destillation unter reduziertem Druck gereinigt. Über Kopf geht bei ca. 88-90 °C (82 mbar) das gewünschte Produkt in über 99 %-iger Reinheit über, während im Sumpf das nicht umgesetzte Carbamat reisoliert werden kann. Dieses wird der Pyrolyse direkt wieder zugeführt.

Nach dem analogen Verfahren wird das weiterhin beschriebene Isocyanatomethyl-methyldimethoxysilan hergestellt.

### Herstellung von N-Phenylaminomethyl-trimethoxysilan:

537 g (5,77 mol) Anilin werden in einem Laborreaktor komplett vorgelegt und anschließend mit Stickstoff inertisiert. Man heizt auf eine Temperatur von 115 °C auf und tropft 328 g (1,92 mol) Chlormethyl-trimethoxysilan über 1,5 h zu und rührt für weitere 30 Minuten bei 125 - 130 °C nach. Nach einer Zugabe von ca. 150 g des Silans fällt vermehrt Anilinhydrochlorid als Salz aus, jedoch bleibt die Suspension bis zum Dosierende gut rührbar.

Überschüssig eingesetztes Anilin (ca. 180 g) wird bei gutem Vakuum (62 °C bei 7 mbar) entfernt. Anschließend gibt-man bei ca. 50 °C 350 ml Toluol zu und rührt die Suspension für 30 min bei 10 °C, um Anilinhydrochlorid zu kristallisieren. Dieses wird anschließend abfiltriert. Das Lösungsmittel Toluol wird im Teilvakuum bei 60 - 70 °C entfernt. Der Rückstand wird destillativ gereinigt (89-91°C bei 0,16 mbar)

Es wird eine Ausbeute von 331,2g, d.h. 75,9% der Theorie, erreicht bei einer Produktreinheit von ca. 96,5 %. Das Produkt enthält etwa 3,5 % N,N-bis-[trimethoxysilylmethyl]-phenylamin als Verunreinigung. Das erhaltene Produkt besitzt einen Chloridgehalt von etwa 100 ppm.

### Beispiel 1a

400 g (50,0 mmol)eines Polypropylenglykols mit einem mittleren Molekulargewicht von 8000 g/mol werden vorgelegt, 1h bei 100 °C im Vakuum entwässert und mit 5,5 g (25 mmol) Isophorondiisocyanat bei 100 °C innerhalb von 60 min. polymerisiert. Das erhaltene OH-terminierte Polyurethanpräpolymer wird danach auf 60 °C abgekühlt und mit 9,8 g (110 mmol) Isocyanatomethyl-trimethoxysilan versetzt und 60 min gerührt, bis im IR-Spektrum keine Isocyanatbande mehr vorhanden ist. Man erhält ein klares, durchsichtiges Polymer mit einer Viskosität von 85 Pas bei 20 °C.

Das so hergestellte silanterminierte Polymer wird in einem Laborplanetenmischer bei ca. 25 °C mit 95 g Diisoundecylphthalat, 20,0 g Vinyltrimethoxysilan und 430 g gefällter und getrockneter Kreide (vorher getrocknet, Wassergehalt < 500 ppm) versetzt und zu einer standfesten Paste verarbeitet. Die so erhaltene Paste zeigt eine Hautbildungzeit won über 1 h (23 °C, 50 % rh). Durch Zusatz von weiteren 20,0 g 3-(2-Aminoethyl)-aminopropyltrimethoxysilan als Katalysator beträgt die Hautbildungszeit an der Luft etwa 5 min (23 °C, 50 % rh).

### Beispiel 1b

400 g (50,0 mmol) eines Polypropylenglykols mit einem mittleren Molekulargewicht von 8000 g/mol werden vorgelegt, 1h bei 100°C im Vakuum entwässert und mit 5,5 g (25 mmol) Isophorondiisocyanat bei 100 °C innerhalb von 60 min. polymerisiert. Das erhaltene OH-terminierte PolyurethanPräpolymer wird anschließend auf 60 °C abgekühlt und mit 8,9 g (55 mmol) Isocyanatomethyl-methyldimethoxysilan versetzt und 60 min gerührt, bis im IR-Spektrum keine Isocyanatbande mehr zu sehen ist. Man erhält ein klares, durchsichtiges Polymer mit einer Viskosität von 77 Pas bei 20°C.
Das so hergestellte silanterminierte Polymer wird in einem Laborplanetenmischer bei ca. 25 °C mit 95 g Diisoundecylphthalat, 20,0 g Vinyltrimethoxysilan und 430 g gefällter und getrockneter Kreide (vorher getrocknet, Wassergehalt < 500 ppm) versetzt und zu einer standfesten Paste verarbeitet. Die so erhaltene Paste zeigt eine Hautbildungzeit von über 3 h (23 °C, 50 % rh). Durch Zusatz von weiteren 20,0 g 3-(2-Aminoethyl)-aminopropyltrimethoxysilan als Katalysator beträgt die Hautbildungszeit an der Luft etwa 15 min (23 °C, 50 % rh).

### Beispiel 2

500 g (11,1 mmol) α,ω-(3-Aminopropyl)-polydimethylsiloxan mit einem mittleren Molekulargewicht von 45 000 g/mol werden in einem beheizbaren mit Vakuumpumpe versehenen Laborplanetenmischer auf 80°C erwärmt und 0,5 h im Vakuum ausgeheizt. Anschließend werden 3,9 g (22,2 mmol) Isocyanatomethyl-trimethoxysilan bei 80 °C zugegeben und weiter eine Stunde gerührt. Mittels IR-Spektroskopie wird die vollständige Umsetzung des Silans anhand der NCO-Bande verfolgt.
Das erhaltene silanterminierte Polymer wird unter Rührung auf 25 °C abgekühlt und mit 230,0 g eines trimethylsilylterminierten Polydimethylsiloxans mit einer Viskosität von 100 Pas, 20,0 g Vinyltrimethoxysilan, 85,0 g einer hydrophilen pyrogenen Kieselsäure versetzt und innerhalb 0,5 h zu einer standfesten Paste verarbeitet. Die so erhaltene Paste zeigt eine Hautbildungzeit von über 2 h (23 °C, 50 % rh). Durch Zusatz von weiteren 8,0 g 3-(2-Aminoethyl)-aminopropyltrimethoxysilan als Katalysator beträgt die Hautbildungszeit an der Luft unter 5 min (23 °C, 50 % rh).

### Beispiel 3

400 g (50,0 mmol)eines Polypropylenglykols mit einem mittleren Molekulargewicht von 8000 g/mol werden vorgelegt, 1h bei 100°C im Vakuum entwässert und mit 19,5 g (110 mmol) Isocyanatomethyl-trimethoxysilan versetzt und 60 min gerührt, bis im IR-Spektrum keine Isocyanatbande mehr vorhanden ist. Man erhält ein klares, durchsichtiges Polymer mit einer Viskosität von 8,5 Pas.
Das so hergestellte silanterminierte Polymer wird in einem Laborplanetenmischer bei ca. 25 °C mit 13,0 g Vinyltrimethoxysilan und 195 g gefällter und getrockneter Kreide (vorher getrocknet, Wassergehalt < 500 ppm) versetzt und zu einer standfesten Paste verarbeitet. Die so erhaltene Paste zeigt eine Hautbildungzeit von über 2 h (23 °C, 50 % rh). Durch Zusatz von weiteren 13,0 g 3-(2-Aminoethyl)-aminopropyltrimethoxysilan als Katalysator beträgt die Hautbildungszeit an der Luft unter 5 min (23 °C, 50 % rh).

### Beispiel 4

Ein nach Beipiel 3 hergestelltes Polymer wird mit jeweils 0,5 % einer basischen Verbindung (siehe Tabelle 1) versetzt und die Hautbildungszeit bei 23 °C, 50 % rh bestimmt.

**Tabelle 1**

| Amin | Ohne | DBU⁽¹⁾ | Cyclohexylamin | Dibutylamin |
|---|---|---|---|---|
| Hautbildungszeit | > 3 h | < 1 min | 2 min | 7 min |
| Amin | Diethylamin | Aminosilan⁽²⁾ | DMAP⁽³⁾ | Triethylamin |
| Hautbildungszeit | 8 min | 5 min | 22 min | 90 min |

| | | | | |
|---|---|---|---|---|
| ⁽¹⁾ DBU: 1,8-Diazabicyclo [5, 4, 0] undec-7-en | | | | |
| ⁽²⁾ Aminosilan: 3-(2-Aminoethyl)-aminopropyltrimethoxysilan | | | | |
| ⁽³⁾ 4-(N,N-Dimethylamino)-pyridin | | | | |

### Beispiel 5

In einem 250 ml Reaktionsgefäß mit Rühr-, Kühl und Heizmöglichkeiten werden 30 g (70,6 mmol) eines Polypropylenglycols mit einer mittleren Molmasse von 425 g/mol vorgelegt und durch 1-stündiges Erwärmen auf 100 C im Membranpumpenvakuum entwässert. Anschließend wird auf ca. 50 °C abgekühlt und bei dieser Temperatur werden unter Stickstoff 24,6 g (141,2 mmol) Toluen-2,4-diisocyanat (TDI) so zugegeben, daß die Temperatur dabei nicht auf über 80 °C steigt. Nach Beendigung der Zugabe wird für 15 min bei 80 °C gerührt.

Man kühlt auf etwa 50 °C ab und gibt 5 ml Vinyltrimethoxysilan als Reaktivverdünner hinzu. Es werden 0,12 g 2,2-Dimorpholinodiethylether (Jeffcat® DMDLS der Fa. Huntsman) als als Säurefänger zugegeben. Damit werden die im *N-*Phenylaminomethyl-trimethoxysilan enthaltenen sauren Anilinhydrochloridderivate neutralisiert. Danach tropft man 32,1 g (141,2 mmol) *N*-Phenylaminomethyl-trimethoxysilan (Chloridgehalt ca. 100 ppm) hinzu und rührt anschließend für 60 min bei 80 °C. In der resultierenden Präpolymermischung lassen sich IR-spektroskopisch keine Isocyanatgruppen mehr nachweisen. Man erhält eine klare, durchsichtige Präpolymermischung, die sich bei 50 °C mit einer Viskosität von ca. 15 Pas problemlos gießen läßt.

Die erhaltene Mischung ist mit Hautbildungszeiten von > 2 h (23 °C, 50 % rh) relativ reaktionsträge. Sie läßt sich problemlos handhaben, abfüllen und/oder mit weiteren Komponenten compoundieren. Zudem ist sie in geschlossenen Gefäßen mindestens 6 Monate lagerstabil.

Die Aktivierung dieser Präpolymermischung ist durch Zugabe beispielsweise von 0,5 Gew.-% Aminopropyl-trimethoxysilan oder 0,5 Gew.-% 1,8-Diazabicyclo[5.4.0]undec-7-en zu jedem gewünschten Zeitpunkt möglich. Mit diesen sehr wirksamen Katalysatoren werden Hautbildungszeiten von ca. 1 min (23 °C, 50 % rh) erreicht. Des weiteren können zur Aktivierung der reaktionsträgen Präpolymermischungen auch sterisch stärker gehinderte Amine eingesetzt werden, um die jeweils gewünschte Reaktivität einzustellen. So können beispielsweise mit sekundären Aminen wie Cyclohexylaminomethyl-trimethoxysilan (Zusatz von 0,5 Gew.-%) Hautbildungszeiten von ca. 10 min (23 °C, 50 % rh) erreicht werden, während tertiäre Amine wie Diethylaminomethyl-trimethoxysilan (Zusatz von 1 Gew.-%) oder Bis(2-dimethylaminoethyl-)ether (Zusatz von 1 Gew.-%) zu Hautbildungszeiten von 20-30 min (23 °C, 50 % rh) führen.

### Vergleichsbeispiel 1

Es wird ebenso vorgegangen wie in Beispiel 5. Allerdings wird dabei auf die Zugabe von 2,2-Dimorpholinodiethylether verzichtet. Dabei erhält man ebenfalls eine klare, durchsichtige Präpolymermischung, die bei 50 °C über eine Viskosität von ca 18 Pas verfügt. Allerdings ist diese Präpolymermischung mit einer Hautbildungszeit von < 1 min (23 °C, 50 % rh) extrem reaktiv. Sie läßt sich nur noch unter Schutzgas handhaben, abfüllen oder mit weiteren Komponenten compoundieren. Sie ist nur in gasdichten Behältnissen lagerstabil. Das Öffnen dieses Behältnisses führt sofort zu einer Hautbildung.

Durch Zugabe von Katalysatoren läßt sich die Reaktivität dieser ohnehin hochreaktiven Präpolymermischung nicht mehr erkennbar steigern.

## Patentansprüche

1. Verfahren zur Regulierung der Hautbildungszeiten von Polymermassen (M), die alkoxysilanterminierte Polymere (P) mit Endgruppen der allgemeinen Formel (1)
-A-CH₂-SiR¹ₐ(OR²)₃₋ₐ (1),
enthalten, wobei
**A** eine zweibindige Bindegruppe ausgewählt aus -O-CO-N(R³)-, -N(R³)-CO-O-, -N(R³)-CO-NH-, -NH-CO-N(R³)-, -N(R³)-CO-N(R³),
**R**^{**1**} einen gegebenenfalls halogensubstuierten Alkyl-, Cycloalkyl-, Alkenyl- oder Arylrest mit 1-10 Kohlenstoffatomen,
**R**^{**2**} einen Alkylrest mit 1-6 Kohlenstoffatomen oder einen ω-Oxaalkyl-alkylrest mit insgesamt 2-10 Kohlenstoffatomen,
**R**^{**3**} Wasserstoff, einen gegebenenfalls halogensubstuierten cyclischen, linearen oder verzweigten C₁- bis C₁₈-Alkyl-oder Alkenylrest oder einen C₆- bis C₁₈-Arylrest und
**a** eine ganze Zahl von 0 bis 2 bedeuten, wobei die Polymermassen (M) durch Einstellen eines Gehalts von höchstens 100 ppm aktivierende Verbindungen (AV), die ausgewählt werden aus sterisch ungehinderten Basen, sterisch ungehinderten Säuren und aromatischen Aminhydrochloriden, bezogen auf die gesamte Masse der Polymermassen (M) bei 23°C und 50 % relativer Luftfeuchtigkeit Hautbildungszeiten > 40 min aufweisen, bei dem die Hautbildungszeiten dieser Polymermassen (M) durch den anschliessenden Zusatz eines Katalysators (K), der ausgewählt wird aus Säuren, Basen und organischen Metallverbindungen in Konzentrationen bis zu 3 Gew.-% auf < 20 min reduziert werden.

2. Verfahren nach Anspruch 1, bei dem die Polymermassen (M) frei sind von aktivierenden Verbindungen (AV), die ausgewählt werden aus sterisch ungehinderten Basen, sterisch ungehinderten Säuren und aromatischen Aminhydrochloriden.

3. Verfahren nach Anspruch 1 oder 2, bei dem die Polymere (P) durch Einsatz eines Aminosilans (A1) der allgemeinen Formel (2)
NH(R³)-CH₂-SiR¹ₐ(OR²)₃₋ₐ (2)
erhalten werden, wobei
**R**^{**1**}**, R**^{**2**} und **a** die in Anspruch 1 angegebenen Bedeutungen aufweisen und
**R**^{**3**} einen C₆- bis C₁₈-Arylrest bedeutet.

4. Verfahren nach Anspruch 3, bei dem die eingesetzten Aminosilane (A1) über einen Chloridgehalt <20 ppm verfügen.

5. Verfahren nach Anspruch 3, bei dem die eingesetzten Aminosilane (A1) frei von Anilinhydrochloridderivaten sind.

6. Verfahren nach Anspruch 3 bis 5, bei dem die Polymermassen (M) zusätzlich noch 0,001 - 3 Gew.-% eines sterisch gehinderten aliphatischen Amins enthalten.

7. Verfahren nach Anspruch 6, bei dem das sterisch gehinderte aliphatische Amin ein N-alkyliertes Morpholinderivat ist.

8. Verfahren nach Anspruch 1 oder 2, bei dem die Polymere (P) durch Einsatz eines Isocyanatosilans (B1) der allgemeinen Formel (5)
OCN-CH₂-SiR¹ₐ(OR²)₃₋ₐ (5)
erhalten werden, wobei
**R**^{**1**}**, R**^{**2**} und **a** die in Anspruch 1 angegebenen Bedeutungen aufweisen.

9. Verfahren nach Anspruch 1 bis 8, bei denen die Katalysatoren (K) organische Aminoverbindungen sind.

10. Verfahren nach Anspruch 1 bis 9, bei denen die Katalysatoren (K) Verbindungen der allgemeinen Formel (8)
R⁷R⁸N-R⁶-SiR¹ₐ(OR²)₃₋ₐ (8),
sind, wobei
**R**^{**6**} einen zweiwertigen, verzweigten oder unverzweigten Kohlenwasserstoffrest mit 1-10 Kohlenstoffatomen, gegebenenfalls unterbrochen von Sauerstoff oder N(R³)-Gruppen bedeutet,
**R**^{**7**}**und R**^{**8**} Wasserstoff oder einen verzweigten oder unverzweigten Alkylrest mit 1-20 Kohlenstoffatomen bedeuten, wobei der Alkylrest auch noch durch Halogenatome, Hydroxylgruppen, Aminogruppen, Monoalkylaminogruppen, Dialkylaminogruppen oder Alkoxygruppen substituiert sein kann und
**R**^{**1**}**, R**^{**2**}**, R**^{**3**} und **a** die in Anspruch 6 angegebenen Bedeutungen besitzen.

11. Polymermassen (M), die alkoxysilanterminierte Polymere (P) mit Endgruppen der allgemeinen Formel (1)
-A-CH₂-SiR¹ₐ(OR²)₃₋ₐ (1),
enthalten, wobei
**A** eine zweibindige Bindegruppe ausgewählt aus -O-CO-N(R³)-, -NH-CO-N(R³)-, -N(R³)-CO-N(R³),
**R**^{**1**} einen gegebenenfalls halogensubstuierten Alkyl-, Cycloalkyl-, Alkenyl- oder Arylrest mit 1-10 Kohlenstoffatomen,
**R**^{**2**} einen Alkylrest mit 1-6 Kohlenstoffatomen oder einen ω-Oxaalkyl-alkylrest mit insgesamt 2-10 Kohlenstoffatomen,
**R**^{**3**} Wasserstoff, einen gegebenenfalls halogensubstuierten cyclischen, linearen oder verzweigten C₁- bis C₁₈-Alkyl-oder Alkenylrest oder einen C₆- bis C₁₈-Arylrest und
**a** eine ganze Zahl von 0 bis 2 bedeuten, wobei
a) die Polymermassen (M) bei 23°C und 50 % relativer Luftfeuchtigkeit Hautbildungszeiten > 40 min aufweisen, und
b) die Hautbildungszeiten dieser Polymermassen (M) durch den Zusatz eines Katalysators (K), der ausgewählt wird aus Säuren, Basen und organischen Metallverbindungen, in Konzentrationen bis zu 3 Gew.-% auf < 20 min reduziert werden können, bei denen die Polymere (P) durch Einsatz eines Aminosilans (A1) der allgemeinen Formel (2)
NH(R³)-CH₂-SiR¹ₐ(OR²)₃₋ₐ (2)
erhalten werden, wobei
**R**^{**3**} in der allgemeinen Formel (2) einen C₆- bis C₁₈-Arylrest bedeutet,
wobei die Polymermassen (M) zusätzlich noch 0,001 - 3 Gew.-% N-alkyliertes Morpholinderivat enthalten.

12. Polymermassen (M), die alkoxysilanterminierte Polymere (P) mit Endgruppen der allgemeinen Formel (1)
-A-CH₂-SiR¹ₐ(OR²)₃₋ₐ (1),
enthalten, wobei
**A** eine zweibindige Bindegruppe -O-CO-NH-,
**R**^{**1**} einen gegebenenfalls halogensubstuierten Alkyl-, Cycloalkyl-, Alkenyl- oder Arylrest mit 1-10 Kohlenstoffatomen,
**R**^{**2**} einen Alkylrest mit 1-6 Kohlenstoffatomen oder einen ω-Oxaalkyl-alkylrest mit insgesamt 2-10 Kohlenstoffatomen und
a eine ganze Zahl von 0 bis 2 bedeuten, wobei
a) die Polymermassen (M) bei 23°C und 50 % relativer Luftfeuchtigkeit Hautbildungszeiten > 40 min aufweisen, und
b) die Hautbildungszeiten dieser Polymermassen (M) durch den Zusatz eines Katalysators (K), der ausgewählt wird aus Säuren, Basen und organischen Metallverbindungen, in Konzentrationen bis zu 3 Gew.-% auf < 20 min reduziert werden können, bei denen die Polymere (P) durch Einsatz eines Isocyanatosilans (B1) der allgemeinen Formel (5)
OCN-CH₂-SiR¹ₐ(OR²)₃₋ₐ (5)
erhalten werden.

13. Verwendung der Polymermassen (M) gemäß Anspruch 11 und 12 im Bereich der Kleb-, Dicht- und Fugendichtstoffe, Montageschäume, Oberflächenbeschichtungen sowie zur Herstellung von Formteilen.

## Claims

1. Method for regulating the skin formation times of polymer compositions (M) which comprise alkoxysilane-terminated polymers (P) having end groups of the general formula (1)
-A-CH₂-SiR¹ₐ(OR²)₃₋ₐ (1)
where
**A** is a divalent linking group selected from -O-CO-N(R³)-, -N(R³) -CO-O-, -N(R³) -CO-NH-, -NR-CO-N(R³)- and -N (R³) -CO-N (R³) ,
**R**^{**1**} is an unsubstituted or halogen-substituted alkyl, cycloalkyl, alkenyl or aryl radical having 1-10 carbon atoms,
**R**^{**2**} is an alkyl radical having 1-6 carbon atoms or an ω-oxaalkyl-alkyl radical having in total 2-10 carbon atoms,
**R**^{**3**} is hydrogen, an unsubstituted or halogen-substituted cyclic, linear or branched C₁ to C₁₈ alkyl or alkenyl radical or a C₆ to C₁₈ aryl radical, and
**a** is an integer from 0 to 2, where the polymer compositions (M), by setting of a content of not more than 100 ppm of activating compounds (AV) selected from sterically unhindered bases, sterically unhindered acids, and aromatic amine hydrochlorides, based on the total mass of the polymer compositions (M), exhibit skin formation times > 40 minutes at 23°C and 50% relative atmospheric humidity, wherein
the skin formation times of these polymer compositions (M) are reduced to < 20 minutes by the subsequent addition of a catalyst (K), which is selected from acids, bases and organometallic compounds, at concentrations of up to 3% by weight.

2. Method according to Claim 1, wherein the polymer compositions are free from activating compounds (AV) selected from sterically unhindered bases, sterically unhindered acids and aromatic amine hydrochlorides.

3. Method according to Claim 1 or 2, wherein the polymers (P) are obtained by using an aminosilane (A1) of the general formula (2)
NH(R³)-CH₂-SiR¹ₐ(OR²)₃₋ₐ (2)
where
**R**^{**1**} **R**^{**2**} and **a** have the definitions indicated in Claim 1 and
**R**^{**3**} is a C₆ to C₁₈ aryl radical.

4. Method according to Claim 3, wherein the aminosilanes (A1) used possess a chloride content of <20 ppm.

5. Method according to Claim 3, wherein the aminosilanes (A1) used are free from aniline hydrochloride derivatives.

6. Method according to Claim 3 to 5, wherein the polymer compositions further contain 0.001%-3% by weight of a sterically hindered aliphatic amine.

7. Method according to Claim 6, wherein the sterically hindered aliphatic amine is an N-alkylated morpholine derivative.

8. Method according to Claim 1 or 2, wherein the polymers (P) are obtained by using an isocyanatosilane (B1) of the general formula (5)
OCN-CH₂-SiR¹ₐ(OR²)₃₋ₐ (5)
where
**R**^{**1**}**, R**^{**2**} and **a** have the definitions indicated in Claim 1.

9. Method according to Claim 1 to 8, wherein the catalysts (K) are organic amino compounds.

10. Method according to Claim 1 to 9, wherein the catalysts (K) are compounds of the general formula (8)
R⁷R⁸N-R⁶-SiR¹ₐ(OR²)₃₋ₐ (8),
where
**R**^{**6**} is a divalent, branched or unbranched hydrocarbon radical having 1-10 carbon atoms, uninterrupted or interrupted by oxygen or groups N(R³),
**R**^{**7**}and **R**^{**8**} are hydrogen or a branched or unbranched alkyl radical having 1-20 carbon atoms, it being also possible for the alkyl radical to be substituted by halogen atoms, hydroxyl groups, amino groups, monoalkylamino groups, dialkylamino groups or alkoxy groups, and
**R**^{**1**}**, R**^{**2**}**, R**^{**3**} and **a** possess the definitions indicated in Claim 6.

11. Polymer compositions (M) which comprise alkoxysilane-terminated polymers (P) having end groups of the general formula (1)
-A-CH₂-SiR¹ₐ(OR²)₃₋ₐ (1)
where
**A** is a divalent linking group selected from -O-CO-N(R³)-, -NH-CO-N(R³)- and -N(R³)-CO-N(R³),
**R**^{**1**} is an unsubstituted or halogen-substituted alkyl, cycloalkyl, alkenyl or aryl radical having 1-10 carbon atoms,
**R**^{**2**} is an alkyl radical having 1-6 carbon atoms or an ω-oxaalkyl-alkyl radical having in total 210 carbon atoms,
**R**^{**3**} is hydrogen, an unsubstituted or halogensubstituted cyclic, linear or branched C₁ to C₁₈ alkyl or alkenyl radical or a C₆ to C₁₈ aryl radical, and
**a** is an integer from 0 to 2, where
a) the polymer compositions (M) exhibit skin formation times > 40 minutes at 23°C and 50% relative atmospheric humidity, and
b) the skin formation times of these polymer compositions (M) can be reduced to < 20 minutes by the addition of a catalyst (K), which is selected from acids, bases and organometallic compounds, at concentrations of up to 3% by weight, in which the polymers (P) are obtained by using an aminosilane (A1) of the general formula (2)
NH (R³)-CH₂-SiR¹ₐ (OR²)₃₋ₐ (2)
where
**R**^{**3**} in the general formula (2) is a C₆ to C₁₈ aryl radical,
the polymer compositions (M) additionally containing 0.001 - 3% by weight of N-alkylated morpholine derivative.

12. Polymer compositions (M) which comprise alkoxysilane-terminated polymers (P) having end groups of the general formula (1)
-A-CH₂-SiR¹ₐ(OR²)₃₋ₐ (1)
where
**A** is a divalent linking group selected from -O-CO-NH-,
**R**^{**1**} is an unsubstituted or halogen-substituted alkyl, cycloalkyl, alkenyl or aryl radical having 1-10 carbon atoms,
**R**^{**2**} is an alkyl radical having 1-6 carbon atoms or an ω-oxaalkyl-alkyl radical having in total 2-10 carbon atoms, and
**a** is an integer from 0 to 2, where
a) the polymer compositions (M) exhibit skin formation times > 40 minutes at 23°C and 50% relative atmospheric humidity, and
b) the skin formation times of these polymer compositions (M) can be reduced to < 20 minutes by the addition of a catalyst (K), which is selected from acids, bases and organometallic compounds, at concentrations of up to 3% by weight, in which the polymers (P) are obtained by using an isocyanatosilane (B1) of the general formula (5)
OCN-CH₂-SiR¹ₐ(OR²)₃₋ₐ (5).

13. Use of the polymer compositions (M) according to Claim 11 and 12 in the area of adhesives, sealants and joint sealers, assembly foams, surface coatings, and also for producing mouldings.

## Revendications

1. Procédé de régulation des temps de formation de peau de masses polymères (M) contenant des polymères (P) à terminaison alcoxysilane comportant des groupes terminaux de la formule générale (1)
-A-CH₂-SiR¹ₐ (OR²)₃₋ₐ (1)
dans laquelle
A représente un groupe de liaison à deux liaisons choisi parmi -O-CO-N(R³) -, -N(R³) -CO-O-, -N(R³) -CO-NH-, -NH-CO-N(R³) -, -N-(R³)-CO-N(R³),
R¹ un radical alkyle, cycloalkyle, alcényle ou aryle éventuellement substitué par de l'halogène, comportant de 1 à 10 atomes de carbone,
R² un radical alkyle comportant de 1 à 6 atomes de carbone ou un radical ω-oxaalkylalkyle comportant au total de 2 à 10 atomes de carbone,
R³ de l'hydrogène, un radical alkyle ou alcényle cyclique, linéaire ou ramifié en C₁ à C₁₈, éventuellement substitué par de l'halogène, ou un radical aryle en C₆ à C₁₈ et
a un nombre entier de 0 à 2,
les masses polymères (M) présentant, par suite d'un ajustement d'une teneur d'un maximum de 100 ppm de composés activateurs (CA), qui sont choisis parmi des bases sans encombrement stérique, des acides sans encombrement stérique et des chlorhydrates d'amine aromatiques, par rapport à la masse totale des masses polymères (M) à 23°C et 50% d'humidité relative ambiante, des temps de formation de peau supérieurs à 40 minutes, où les temps de formation de peau de ces masses polymères (M) sont réduits à moins de 20 minutes par l'addition subséquente d'un catalyseur (C), qui est choisi parmi des acides, des bases et des composés organiques métalliques en des concentrations allant jusqu'à 3% en poids.

2. Procédé suivant la revendication 1, dans lequel les masses polymères (M) sont exemptes de composés activateurs (CA) choisis parmi des bases sans encombrement stérique, des acides sans encombrement stérique et des chlorhydrates d'amine aromatiques.

3. Procédé suivant la revendication 1 ou 2, dans lequel les polymères (P) sont obtenus par mise en oeuvre d'un aminosilane (A1) de la formule générale (2)
NH(R³) -CH₂-SiR¹ₐ(OR²)₃₋ₐ (2)
dans laquelle
R¹, R² et a ont les significations indiquées dans la revendication 1,
R³ représente un radical aryle en C₆ à C₁₈.

4. Procédé suivant la revendication 3, dans lequel les aminosilanes (A1) mis en oeuvre possèdent une teneur en chlorure de moins de 20 ppm.

5. Procédé suivant la revendication 3, dans lequel les aminosilanes (A1) mis en oeuvre sont exempts de dérivés de chlorhydrate d'aniline.

6. Procédé suivant les revendications 3 à 5, dans lequel les masses polymères (M) contiennent encore en outre de 0,001 à 3% en poids d'une amine aliphatique à encombrement stérique.

7. Procédé suivant la revendication 6, dans lequel l'amine aliphatique à encombrement stérique est un dérivés de morpholine N-alkylé.

8. Procédé suivant la revendication 1 ou 2, dans lequel les polymères (P) sont obtenus par mise en oeuvre d'un isocyanatosilane (B1) de la formule générale (5)
OCN-CH₂-SiR¹ₐ (OR²)₃₋ₐ (5)
dans laquelle
R¹, R² et a ont les significations indiquées dans la revendication 1.

9. Procédé suivant les revendications 1 à 8, dans lequel les catalyseurs (C) sont des composés organiques aminés.

10. Procédé selon les revendications 1 à 9, dans lequel les catalyseurs (C) sont des composés de la formule générale (8)
R⁷R⁸N-R⁶-SiR¹ₐ (OR²)₃₋ₐ (8)
dans laquelle
R⁶ représente un radical hydrocarboné bivalent, ramifié ou non ramifié, comportant de 1 à 10 atomes de carbone, éventuellement interrompu par de l'oxygène ou des groupes N(R³)-,
R⁷ et R⁸ représentent de l'hydrogène ou un radical alkyle ramifié ou non ramifié comportant de 1 à 20 atomes de carbone, le radical alkyle pouvant aussi être substitué par des atomes d'halogène, des groupes hydroxyle, des groupes amino, des groupes monoalkylamino, des groupes dialkylamino ou des groupes alcoxy, et
R¹, R², R³ et a ont les significations indiquées dans la revendication 6.

11. Masses polymères (M) contenant des polymères (P) à terminaison alcoxysilane comportant des groupes terminaux de la formule générale (1)
-A-CH₂-SiR¹ₐ (OR²)₃₋ₐ (1)
dans laquelle
A représente un groupe de liaison à deux liaisons choisi parmi -O-CO-N(R³) -, -NH-CO-N(R³)-, N-(R³)-CO-N(R³),
R¹ un radical alkyle, cycloalkyle, alcényle ou aryle éventuellement substitué par de l'halogène, comportant de 1 à 10 atomes de carbone,
R² un radical alkyle comportant de 1 à 6 atomes de carbone ou un radical ω-oxaalkylalkyle comportant au total de 2 à 10 atomes de carbone,
R³ de l'hydrogène, un radical alkyle ou alcényle cyclique, linéaire ou ramifié en C₁ à C₁₈, éventuellement substitué par de l'halogène, ou un radical aryle en C₆ à C₁₈ et
a un nombre entier de 0 à 2, avec
a) les masses polymères (M) présentant à 23°C et 50% d'humidité relative ambiante, des temps de formation de peau supérieurs à 40 minutes, et
b) les temps de formation de peau de ces masses polymères (M) pouvant être réduits à moins de 20 minutes par l'addition d'un catalyseur (C), qui est choisi parmi des acides, des bases et des composés organiques métalliques en des concentrations allant jusqu'à 3% en poids, les polymères (P) étant obtenus par mise en oeuvre d'un aminosilane (A1) de la formule générale (2)
NH(R³) -CH₂-SiR¹ₐ(OR²)₃₋ₐ (2)
dans laquelle
R³ dans la formule générale (2) représente un radical aryle en C₆ à C₁₈,
les masses polymères (M) contenant encore en outre de 0,001 à 3% en poids d'un dérivé de morpholine N-alkylé.

12. Masses polymères (M) contenant des polymères (P) à terminaison alcoxysilane comportant des groupes terminaux de la formule générale (1)
-A-CH₂-SiR¹ₐ (OR²)₃₋ₐ (1)
dans laquelle
A représente un groupe de liaison à deux liaisons O-CO-NH-,
R¹ un radical alkyle, cycloalkyle, alcényle ou aryle éventuellement substitué par de l'halogène, comportant de 1 à 10 atomes de carbone,
R² un radical alkyle comportant de 1 à 6 atomes de carbone ou un radical ω-oxaalkylalkyle comportant au total de 2 à 10 atomes de carbone, et
a est un nombre entier de 0 à 2, avec
a) les masses polymères (M) présentant à 23°C et 50% d'humidité relative ambiante, des temps de formation de peau supérieurs à 40 minutes, et
b) les temps de formation de peau de ces masses polymères (M) pouvant être réduits à moins de 20 minutes par l'addition d'un catalyseur (C), qui est choisi parmi des acides, des bases et des composés organiques métalliques en des concentrations allant jusqu'à 3% en poids, les polymères (P) étant obtenus par mise en oeuvre d'un isocyanatosilane (B1) de la formule générale (5)
OCN-CH₂-SiR¹ₐ (OR²)₃₋ₐ (5)

13. Utilisation des masses polymères (M) suivant les revendications 11 et 12 dans le domaine des adhésifs, des masses d'étanchéité et des masses d'étanchement de joints, des mousses de montage, des revêtements de surface et pour la préparation de pièces moulées.
